# EUROPEAN PATENT APPLICATION

(11) **EP 4 270 626 A1**
(43) Date of publication of application: **01.11.2023**
(21) Application number: 21963037.3
(22) Date of filing: 08.11.2021
(51) Int. Cl.: H01M 50/411

(54) **COMPOSITE SEPARATOR OF SECONDARY BATTERY AND SECONDARY BATTERY CONTAINING COMPOSITE SEPARATOR**

(71) Applicant: Contemporary Amperex Technology Co., Limited, Ningde, Fujian 352100 (CN)
(72) Inventor: WU, Ze, Ningde, Fujian 352100 (CN); LIU, Jiang, Ningde, Fujian 352100 (CN); CAO, Jiao, Ningde, Fujian 352100 (CN); YAO, Bin, Ningde, Fujian 352100 (CN); YANG, Limei, Ningde, Fujian 352100 (CN); LIU, Heyang, Ningde, Fujian 352100 (CN)
(74) Representative: Ziebig Hengelhaupt Intellectual Property Attorneys Patentanwaltskanzlei PartGmbB
(86) International application number: PCT/CN2021/129400
(87) International publication number: WO 2023/077528

(57) **Abstract**

The present application provides a composite separator for a secondary battery and a secondary battery including the composite separator. The composite separator is characterized by comprising a substrate and a solid organic additive layer provided on at least one surface of the substrate, the solid organic additive layer comprising an organic additive for an electrolyte solution. Additives can be added to the electrolyte solution through the composite separator for a secondary battery of the present application, which can improve the cycle life and safety performance of the battery.

## Description

### Technical Field

The present application relates to the field of batteries, and particularly to a composite separator for a secondary battery and a secondary battery comprising the composite separator.

### Background Art

Secondary batteries have the advantages of high energy density, long cycle life, good safety and reliability, and have been widely used in various digital products, portable devices, electric vehicles, energy storage power sources, etc. In recent years, with the increasing demand for secondary batteries, higher requirements have also been placed on secondary batteries.

For the electrolyte solution system of the existing secondary battery, the amount of additives often determines the long-term cycle life of the battery. Generally, the higher the amount of additives, the better the cycle performance of the battery in the later stage. However, with the increase in the amount of additives, the viscosity of the electrolyte solution gradually increases, which leads to problems of difficulty in liquid injection and lithium precipitation in the battery cell due to uneven distribution of additives.

Therefore, there is an urgent need for a technical means capable of overcoming the above-mentioned defects.

### Summary of the Invention

In view of the above problems, an objective of the present application is to provide a composite separator for a secondary battery that can add additives to the electrolyte solution so as to improve the cycle life and safety performance of the battery.

A first aspect of the present application provides a composite separator for a secondary battery, characterized by comprising a substrate and a solid organic additive layer provided on at least one surface of the substrate, the above-mentioned solid organic additive layer including an organic additive for an electrolyte solution.

The electrolyte solution can be supplemented with additives by the composite separator of the present application. That is, the electrolyte solution is supplemented with additives by another new way other than directly adding the additive to the electrolyte solution, which solves the problems of difficulty in liquid injection and uneven distribution of the additive resulting from increased viscosity of the electrolyte solution caused by increased amount of the additive in the electrolyte solution in the prior art, and additionally can add organic additives to the electrolyte solution continuously for a long time, thereby improving the cycle life and safety performance of the battery.

In any embodiment, preferably, the above-mentioned organic additive for an electrolyte solution is selected from at least one of ethylene sulfate (DTD), propylene sulfate, 1,3-propanesultone, methylene methanedisulfonate (MMDS) and biphenyl. The above-mentioned specific additives can exist in a solid state at room temperature, and therefore, these additives can exist in a solid state on the surface of the substrate.

In any embodiment, preferably, the above-mentioned solid organic additive has a thickness of 0.5-5 µm.

In any embodiment, preferably, in the above-mentioned solid organic additive layer, the content of the organic additive for an electrolyte solution is 0.01 to 10 mg/cm².

In any embodiment, preferably, the surface roughness of the above-mentioned substrate is 3 µm ≤ Ra ≤ 10 µm. By keeping the surface roughness of the substrate within the above-mentioned specific range, the substrate and the solid organic additive layer can be bonded more firmly.

In any embodiment, preferably, an inorganic material layer is further provided between the above-mentioned substrate and the above-mentioned solid organic additive layer. More preferably, the above-mentioned inorganic material layer comprises at least one selected from aluminum oxide and aluminum hydroxide. By coating the inorganic material layer on the surface of the substrate, the surface roughness of the substrate can be improved, so that the substrate and the solid organic additive layer can be more firmly bonded.

In any embodiment, preferably, the above-mentioned solid organic additive layer further comprises a binder. Optionally, the binder is selected from at least one of polyvinylidene fluoride, sodium alginate and styrene butadiene rubber. Adhesion can be further improved by adding the binder to the solid organic additive layer.

In any embodiment, preferably, the above-mentioned organic additive for an electrolyte solution is biphenyl, and the above-mentioned binder comprises at least one selected from sodium alginate and styrene butadiene rubber. Adhesion can be further improved by using biphenyl in combination with sodium alginate and/or styrene butadiene rubber.

In any embodiment, preferably, sodium alginate is included in the above-mentioned solid organic additive layer, wherein relative to the total weight of the above-mentioned solid organic additive layer, the content of the above-mentioned sodium alginate is 0.5wt% to 2.0wt%. By controlling the amount of sodium alginate within the above-mentioned specific range, a more excellent binding effect can be obtained.

In any embodiment, preferably, the above-mentioned organic additive for an electrolyte solution is selected from at least one of ethylene sulfate, propylene sulfate, 1,3-propanesultone, and methylene methanedisulfonate, and the above-mentioned binder comprises polyvinylidene fluoride. Adhesion can be further improved by using the above-mentioned specific organic additive for an electrolyte solution in combination with polyvinylidene fluoride.

In any embodiment, preferably, the above-mentioned substrate is made of at least one of polypropylene (PP), polyethylene (PE), polyvinylidene fluoride, polyimide and glass fiber.

A second aspect of the present application provides a secondary battery comprising a positive electrode, a negative electrode, the composite separator for a secondary battery of the first aspect of the present application, and an electrolyte solution.

By comprising the composite separator of the first aspect of the present application, the secondary battery can make the electrolyte solution obtain more additives, thereby improving the battery life.

In any embodiment, preferably, the organic additive for an electrolyte solution of the first aspect of the present application is contained in the above-mentioned electrolyte solution, and the above-mentioned organic additive for an electrolyte solution reaches a saturated concentration.

Therefore, the organic additives on the composite separator are not dissolved into the electrolyte solution before the battery is put into operation, but are slowly dissolved into the electrolyte solution as the organic additives in the electrolyte solution are consumed during battery cycling, thereby adding organic additives to the electrolyte solution continuously for a long time.

A third aspect of the present application provides an electrical apparatus comprising the secondary battery of the second aspect of the present application.

### Invention Effects

Through the present application, at least the following technical effects can be obtained:
(1) The electrolyte solution is supplemented with additives by a new way, which solves the problems of difficulty in liquid injection and uneven distribution of the additive resulting from increased viscosity of the electrolyte solution caused by increased amount of the additive in the electrolyte solution in the prior art, and additionally can add organic additives to the electrolyte solution continuously for a long time, thereby improving the cycle life and safety performance of the battery.
(2) The consumption of organic additives on the composite separator can form voids between the electrode layers, ease the increase in the expansion force during the cycling, reduce the internal pressure of the battery, improve the safety performance of the battery, and further prolong the battery life.

The above description is only a summary of the technical solutions of the present application. In order to be able to understand the technical means of the present application more clearly for implementation according to the content of the specification, and to make the above and other objectives, features and advantages of the present application more comprehensible, specific embodiments of the present application are exemplified below.

### Description of Drawings

Various other advantages and benefits will become apparent to those of ordinary skill in the art upon reading the following detailed description of the preferred embodiments. The drawings are for the purpose of illustrating the preferred embodiments only and are not to be considered a limitation to the present application. In the drawings:
Fig. 1 is a schematic structural view of a composite separator according to Example 1 of the present application;
Fig. 2 is a schematic structural view of a composite separator according to Example 14 of the present application;
Fig. 3 is a scanning electron microscope (SEM) photograph of the uncoated side of the PE substrate in the composite separator of Example 14 of the present application;
Fig. 4 is a scanning electron microscope (SEM) photograph of the CCS/DTD-coated side of the PE substrate in the composite separator of Example 14 of the present application;
Fig. 5 is a graph of the additive concentration in the electrolyte solution versus number of cycles when adopting separator A and separator A' respectively in Example 1-b;
Fig. 6 is a graph of cycling decay in conventional 1C/1C cycling in the range of 2.5-3.65 V for Example 1-b and Comparative Example 1;
Fig. 7 is a graph of cycling decay in high pressure cycling in the range of 2.5-4.0 V for Example 16 and Comparative Example 2;

### Detailed Description

Hereinafter, the composite separator of the present application and a secondary battery including the composite separator will be described in detail.

For the sake of brevity, the present application specifically discloses some numerical ranges. However, any lower limit can be combined with any other upper limit to form a range not explicitly recited; and any lower limit can be combined with another lower limit to form a range not explicitly recited, and likewise, any upper limit can be combined with any another upper limit to form a range not explicitly recited. Furthermore, every point or single numerical value between the endpoints of a range is included within the range, even if not expressly recited. Thus, each point or single numerical value may serve as its own lower or upper limit to form an unspecified range in combination with any other point or single numerical value or with other lower or upper limits. It should be understood that the recitation of numerical values is by way of example only and should not be construed as exhaustive.

In the description herein, it should be noted that, unless otherwise specified, "above", "below", "≤" and "≥" are inclusive of the number itself, "at least one" means one or more, and "more" in "one or more" means two or more.

Unless otherwise specified, the terms "comprise", "comprising", "include" and "including" mentioned in the present application may be open-ended or closed-ended. For example, "including" and "comprising" may indicate that it is possible to include or comprise other components not listed, and it is also possible to include or comprise only the listed components.

### Composite separator for secondary battery

A first aspect of the present application provides a composite separator for a secondary battery, characterized by comprising a substrate and a solid organic additive layer provided on at least one surface of the substrate, the solid organic additive layer including an organic additive for an electrolyte solution. In the present application, the solid organic additive layer may be a continuous layer or a discontinuous layer (eg, a layer that exists in segments).

In the electrolyte solution, the additive is mainly consumed rapidly at the beginning of the battery cycle, and its consumption rate gradually slows down as the cycling proceeds. Therefore, in the present application, a solid organic additive layer is formed by uniformly applying the organic additive for an electrolyte solution on the separator by spray coating or gravure coating. As the battery cycling proceeds, the additive in the solid organic additive layer on the separator is gradually dissolved in the electrolyte solution, thereby achieving the long-term replenishment of additives in the electrolyte solution.

In addition, the cycle life of the power battery is closely related to the expansion force. Due to the limited space inside the case, when the expansion force reaches a certain threshold, the mutual extrusion between the electrode layers leads to the difficulty in electrolyte solution infiltration, the increase of concentration polarization and the deterioration of kinetics, causing black spots/lithium precipitation and other phenomena, and deteriorated cycle life. By adopting the composite separator structure of the present application, the consumption of organic additives on the composite separator can form voids between the electrode layers, ease the increase in the expansion force during the cycling, reduce the internal pressure of the battery, improve the safety performance of the battery, and further prolong the battery life.

The solid organic additive layer in the composite separator of the present application comprises an organic additive for an electrolyte solution, which is an additive used in the electrolyte solution of the secondary battery, and satisfies the characteristics of organic additives for an electrolyte solution, with its lowest unoccupied molecular orbital (LUMO) energy less than that of the solvent of the electrolyte solution of the secondary battery.

In addition, the solid organic additive layer may comprise different types of organic additives for electrolyte solutions according to different environments where the battery is used. For example, when the battery is used in an environment having a temperature lower than room temperature (25°C), an organic additive for an electrolyte solution with a melting point of 25°C or higher or 30°C or higher can be selected, which enables the organic additive for an electrolyte solution to exist on the separator in the form of a solid organic additive layer in the environment where the battery is used.

In an embodiment of the present application, preferably, the organic additive for an electrolyte solution is selected from at least one of ethylene sulfate (DTD), propylene sulfate, 1,3-propanesultone, methylene methanedisulfonate (MMDS) and biphenyl. These additives are solid at room temperature, can exist in the form of a coating layer on the surface of the separator substrate, and can be released into the electrolyte solution to play a role when it needs to add additives in the electrolyte solution.

In an embodiment of the present application, preferably, the thickness of the solid organic additive layer is 0.5-5 µm, so that the solid organic additive layer can stably exist on the surface of the substrate. In addition, in the above-mentioned solid organic additive layer, the content of the above-mentioned organic additive for an electrolyte solution is 0.01-10 mg/cm², preferably 0.5-8 mg/cm², and more preferably 1.0-7 mg/cm².

In an embodiment of the present application, preferably, the surface roughness of the substrate is 3 µm ≤ Ra ≤ 10 µm, and more preferably 5 µm ≤ Ra ≤ 8 µm. When the surface roughness is less than 3 µm, the adhesion between the solid organic additive layer and the substrate is poor, and when the surface roughness is greater than 10 µm, the solid organic additive layer may be damaged.

In an embodiment of the present application, preferably, an inorganic material layer is further provided between the above-mentioned substrate and the above-mentioned solid organic additive layer. Preferably, the above-mentioned inorganic material layer comprises at least one selected from aluminum oxide and aluminum hydroxide.

When the solid organic additive is directly sprayed on the surface of the separator substrate, chalking and peeling easily occur in the process of actual production. Therefore, before spraying, a layer of inorganic alumina/aluminum hydroxide is pre-coated on the surface of the substrate by microgravure coating, which can increase the surface roughness of the substrate. Then, the pretreated solid organic additive slurry is coated on the surface of the inorganic material layer by spray coating or gravure coating to obtain a composite separator composed of substrate/inorganic material layer/solid organic additive layer with good adhesion. In particular, such a separator can meet the processing requirements of conventional battery cells having a square case.

In an embodiment of the present application, preferably, the solid organic additive layer further comprises a binder. Optionally, the above-mentioned binder is selected from at least one of polyvinylidene fluoride (PVDF), sodium alginate and styrene butadiene rubber (SBR).

By further adding at least one of PVDF, SBR and sodium alginate as a binder to the solid organic additive layer, the surface adhesion of the organic additive on the substrate can be improved. In addition, for cylindrical battery cells, due to the small curvature radius of the winding needle, the tension of the separator during the actual winding process is greater, and the method of improving the adhesion of the additive only by improving the surface roughness of the substrate by using the inorganic material layer cannot fully meet the requirements. In view of this, by adding a small amount of the above-mentioned binder to the organic additive slurry, the adhesion can be further improved, thereby fully meeting the processing requirements of cylindrical battery cells.

In an embodiment of the present application, preferably, the above-mentioned organic additive for an electrolyte solution is biphenyl, and the above-mentioned binder comprises at least one selected from sodium alginate and styrene butadiene rubber (SBR).

The use of the biphenyl that can be stably dispersed in the aqueous slurry in combination with sodium alginate and/or styrene butadiene rubber (SBR) can provide a better effect. Specifically, biphenyl is stable to water, the viscosity of the slurry obtained by directly dispersing biphenyl in water is low, the fluidity of the slurry after spraying is high, the compatibility with the substrate is poor, and it is difficult to control the consistency of weight distribution of the additive on the surface of the substrate. Therefore, by introducing a small amount of sodium alginate and/or styrene butadiene rubber (SBR) into the slurry, the viscosity of the slurry and its compatibility with the separator can be improved, and a modified separator with uniform weight distribution can be obtained. Among them, sodium alginate is more preferable as a thickener to improve the viscosity of the slurry and also as a binder to improve the adhesion of the slurry. When sodium alginate is included in the above-mentioned solid organic additive layer, relative to the total weight of the above-mentioned solid organic additive layer, the content of the above-mentioned sodium alginate is preferably 0.5wt% to 2.0wt%, and more preferably 0.75wt% to 1.5wt%. By restricting the content of sodium alginate within this range, the binding effect can be more fully exhibited.

In an embodiment of the present application, the organic additive for an electrolyte solution is selected from at least one of ethylene sulfate, propylene sulfate, 1,3-propanesultone, and methylene methanedisulfonate, and the binder comprises polyvinylidene fluoride (PVDF).

Ethylene sulfate, propylene sulfate, 1,3-propanesultone and methylene methanedisulfonate are stably dispersed in oily slurries (e.g., NMP), and these additives can be used in combination with PVDF to obtain a better binding effect.

In the composite separator of the present application, the substrate of the composite separator is not particularly limited. For example, the substrate of the composite separator can be selected from at least one of polypropylene (PP), polyethylene (PE), polyvinylidene fluoride, polyimide and fiber glass.

### Secondary battery

A second aspect of the present application provides a secondary battery comprising a positive electrode, a negative electrode, the composite separator for a secondary battery of the first aspect of the present application, and an electrolyte solution.

In the secondary battery of the second aspect of the present invention, the positive electrode can be appropriately selected according to actual needs without particular limitation, and may comprise a conductive agent, a binder, a positive electrode active material, and the like. There are no particular limitations on the kinds of the conductive agent, the binder, and the positive electrode active material, and they can be appropriately selected.

For example, the positive electrode active material may include at least one of a lithium-containing phosphate of olivine-structure, a lithium transition metal oxide, and modified compounds thereof. However, the present application is not limited to these materials, and other conventional materials useful as positive electrode active materials for batteries can also be used. These positive electrode active materials may be used alone or in combination of two or more thereof. Among them, examples of lithium transition metal oxides may include but are not limited to, at least one of a lithium-cobalt oxide (such as LiCoO₂), a lithium-nickel oxide (such as LiNiO₂), a lithium-manganese oxide (such as LiMnO₂ and LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also referred to as NCM₃₃₃), LiNi_{0.5}Co_{0.2}Mn_{0.3}O₂ (may also be abbreviated as NCM₅₂₃), LiNi_{0.5}Co_{0.25}Mn_{0.25}O₂ (may also be abbreviated as NCM₂₁₁), LiNi_{0.6}Co_{0.2}Mn_{0.2}O₂ (may also be abbreviated as NCM₆₂₂), LiNi_{0.8}Co_{0.1}Mn_{0.1}O₂ (also referred to as NCM₈₁₁ for short), a lithium-nickel-cobalt-aluminum oxide (such as LiNi_{0.85}Co_{0.15}Al_{0.05}O₂) and modified compounds thereof. Examples of the lithium-containing phosphate of olivine structure may include, but are not limited to, at least one of lithium iron phosphate (such as LiFePO₄(also referred to as LFP)), a composite material of lithium iron phosphate and carbon, lithium manganese phosphate (such as LiMnPO₄), a composite material of lithium manganese phosphate and carbon, lithium iron manganese phosphate, and a composite material of lithium manganese iron phosphate and carbon.

In the secondary battery of the second aspect of the present invention, the negative electrode can be appropriately selected according to actual needs, and is not particularly limited. The negative electrode may comprise a conductive agent, a binder, and a negative electrode active material. The kinds of the above-mentioned conductive agent, binder, and negative electrode active material are not particularly limited. For example, natural graphite and artificial graphite can be used as the negative electrode active material. The two can be mixed in any ratio, and either of the two can be used alone.

In the secondary battery of the second aspect of the present invention, the electrolyte solution plays a role of conducting ions between the positive electrode and the negative electrode, and the above-mentioned electrolyte solution may include an electrolyte salt, a solvent and an additive. The electrolyte salt is not particularly limited, and for example, may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluoro bis(oxalato)phosphate, and lithium tetrafluoro(oxalato)phosphate. The solvent is not particularly limited, and for example, may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In an embodiment of the present application, preferably, the electrolyte solution comprises the organic additive for an electrolyte solution as described in the first aspect of the present application, preferably, the organic additive selected from at least one of ethylene sulfate (DTD), propylene sulfate, 1,3-propanesultone, methylene methanedisulfonate (MMDS) and biphenyl, and the organic additive for an electrolyte solution reaches a saturated concentration in the electrolyte solution. Therefore, before the battery is put into operation, since the corresponding additives with saturated concentrations already exist in the electrolyte, the additives coated on the composite separator at this point exist in the form of a solid additive layer and are basically not dissolved in the electrolyte solution. After the battery is put into operation, as the organic additive in the electrolyte solution is consumed during the battery cycling, it becomes unsaturated in the electrolyte solution. At this time, the additive in the solid organic additive layer of the composite separator can gradually dissolve into the electrolyte solution to compensate for the additive that is consumed in the electrolyte solution during the battery cycling, and stops dissolving when becoming saturated again. When the additive in the electrolyte solution is consumed again, the remaining organic additive in the solid organic additive layer of the composite separator is further dissolved into the electrolyte solution, which can prolong the maintenance time of the saturated state of the organic additive in the electrolyte solution, provide the electrolyte solution with sufficient additives for a longer period of time, increase the amount of additives in the electrolyte, thereby improving the cycle life of the battery.

### Electrical apparatus

In a third aspect, there is provided an electrical apparatus comprising a secondary battery of the second aspect of the present invention.

In the electrical apparatus of the present invention, the secondary battery of the invention can be used as a power source for the above-mentioned electrical apparatus, or can be used as an energy storage unit for the above-mentioned electrical apparatus. The above-mentioned electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

### Examples

Examples of the present invention will be described hereinafter. The examples described below are exemplary and only used to explain the present application, and should not be construed as a limitation to the present application. Where specific techniques or conditions are not specified in the examples, the techniques or conditions described in the literatures of the art or the product specifications are followed. Where manufacturers are not specified, the reagents or instruments used are conventional products and are commercially available.

### Example 1

3 kg of ethylene sulfate (DTD) and 4 kg of N-methyl pyrrolidone (NMP) were taken and dispersed in a stirrer at room temperature at a rotational speed of 800 rpm for 30 min to obtain a slurry. The viscosity of the resultant slurry was 3800 mPa·s.

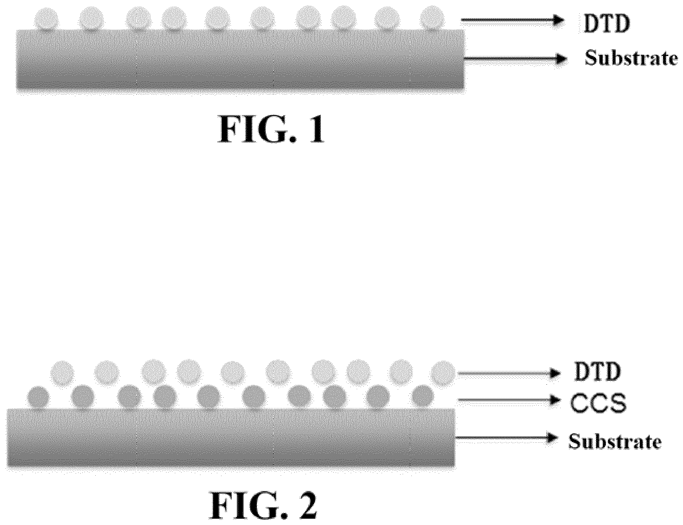

Using polypropylene (PP) with a thickness of 16 µm as the substrate, the slurry obtained above was gravure coated (gravure roll diameter 30 µm, gravure speed 35 m/min) on the surface of the PP substrate, and the coating amount was controlled through the slurry ratio, gravure speed and gravure roll pit depth. In addition, it was confirmed that the coating amount was 4.5 mg/cm² by measuring the weight of the separator before and after the gravure coating. The thickness of the additive layer was confirmed to be 2.5 µm by measuring the thickness of the separator before and after the gravure coating. Drying was conducted under the conditions of an oven temperature of 50°C and an air volume of 40 m/s to obtain a PP/DTD composite separator. The schematic diagram of the structure of the composite separator is shown in Fig. 1. It should be noted that Fig. 1 shows only a schematic diagram of the structure of the solid organic additive layer. In the present application, the particles in the solid organic additive layer may constitute a layer in a stacked state or in a dispersed state.

### Example 2

3 kg of propylene sulfate and 6 kg of NMP were taken and dispersed in a stirrer at room temperature at a rotational speed of 800 rpm for 30 min to obtain a slurry. The viscosity of the resultant slurry was 3200 mPa·s. Except for the above, the same operation as in Example 1 was carried out to obtain a PP/propylene sulfate composite separator.

### Example 3

5 kg of 1,3-propanesultone and 5 kg of NMP were taken and dispersed in a stirrer at room temperature at a rotational speed of 800 rpm for 30 min to obtain a slurry. The viscosity of the resultant slurry was 4700 mPa·s. Except for the above, the same operation as in Example 1 was carried out to obtain a PP/1,3-propanesultone composite separator.

### Example 4

4 kg of methylene methanedisulfonate (MMDS) and 3 kg of NMP were taken and dispersed in a stirrer at room temperature at a rotational speed of 800 rpm for 30 min to obtain a slurry. The viscosity of the resultant slurry was 4200 mPa·s. Except for the above, the same operation as in Example 1 was carried out to obtain a PP/MMDS composite separator.

### Example 5

2.5 kg of biphenyl and 5 kg of deionized water were taken and dispersed in a stirrer at room temperature at a rotational speed of 800 rpm for 30 min to obtain a slurry. The viscosity of the resultant slurry was 3600 mPa·s. Except for the above, the same operation as in Example 1 was carried out to obtain a PP/biphenyl composite separator.

### Example 6

3 kg of DTD, 1 kg of propylene sulfate and 4 kg of NMP were taken and dispersed in a stirrer at room temperature at a rotational speed of 800 rpm for 30 min to obtain a slurry. The viscosity of the resultant slurry was 4500 mPa·s. Except for the above, the same operation as in Example 1 was carried out to obtain a PE/ (DTD + propylene sulfate) composite separator.

### Example 7

2.5 kg of propylene sulfate, 1.5 kg of MMDS, and 4 kg of NMP were taken and dispersed in a stirrer at room temperature at a rotational speed of 800 rpm for 30 min to obtain a slurry. The viscosity of the resultant slurry was 3800 mPa·s. Except for the above, the same operation as in Example 1 was carried out to obtain a PE/ (propylene sulfate + MMDS) composite separator.

### Example 8

1 kg of DTD, 1 kg of propylene sulfate, 1 kg of MMDS, and 4 kg of NMP were taken and dispersed in a stirrer at room temperature at a rotational speed of 800 rpm for 30 min to obtain a slurry. The viscosity of the resultant slurry was 3650 mPa s. Except for the above, the same operation as in Example 1 was carried out to obtain a PE/ (DTD + propylene sulfate + MMDS) composite separator.

### Example 9

1 kg of DTD, 1.5 kg of NMP and 20 g of polyvinylidene fluoride (PVDF) were taken and dispersed in a stirrer at room temperature at a rotational speed of 800 rpm for 30 min to obtain a slurry. The viscosity of the resultant slurry was 3750 mPa s. Except for the above, the same operation as in Example 1 was carried out to obtain a PE/DTD composite separator.

### Example 10

2 kg of propylene sulfate, 2 kg of NMP, and 48 g of PVDF were taken and dispersed in a stirrer at room temperature at a rotational speed of 800 rpm for 30 min to obtain a slurry. The viscosity of the resultant slurry was 3900 mPa·s. Except for the above, the same operation as in Example 1 was carried out to obtain a PE/propylene sulfate composite separator.

### Example 11

2 kg of biphenyl, 3 kg of deionized water and 25 g of sodium alginate were taken and dispersed in a stirrer at room temperature at a rotational speed of 800 rpm for 30 min to obtain a slurry. The viscosity of the resultant slurry was 5500 mPa·s. Except for the above, the same operation as in Example 1 was carried out to obtain a PE/biphenyl composite separator.

### Example 12

A slurry was prepared as shown in Example 1. Using a conventional gravure coating process, an aluminum oxide layer (CCS layer) with a thickness of 2 µm was pre-coated on the surface of a PE substrate with a thickness of 9 µm, and then the above slurry was used as a raw material to perform secondary gravure coating on the surface of the CCS. The gravure roll diameter was 25 mm, the gravure speed was 25 m/min, the oven temperature was 55°C, and the air volume was 35 m/s. A PE/CCS/DTD composite separator was obtained.

### Example 13

1 kg of DTD, 1.5 kg of 1,3-propanesultone and 2.5 kg of NMP were taken and dispersed in a stirrer at room temperature at a rotational speed of 800 rpm for 30 min to obtain a slurry. The viscosity of the resultant slurry was 4100 mPa·s. Except that aluminum hydroxide with a thickness of 2 µm was coated on the surface of a PE substrate with a thickness of 9 µm, the same operation as in Example 12 was carried out to obtain a PE/aluminum hydroxide layer/ (DTD + 1,3-propanesultone) composite separator.

### Example 14

1.5 kg of DTD, 1.5 kg of NMP and 30 g of PVDF were taken and dispersed in a stirrer at room temperature at a rotational speed of 800 rpm for 30 min to obtain a slurry. The viscosity of the resultant slurry was 4200 mPa·s. Except for the above, the same operation as in Example 12 was carried out to obtain a PE/CCS/DTD composite separator.

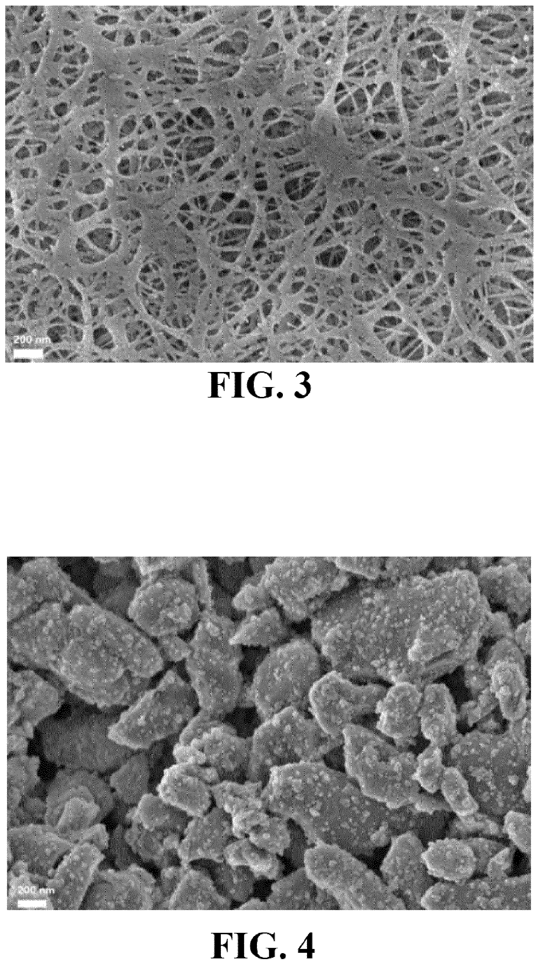

The schematic diagram of the structure of the composite separator is shown in Fig. 2. Both sides of the composite separator prepared in Example 14 were observed with a scanning electron microscope (SEM), and the results are shown in Figs. 3 and 4, respectively.

### Example 15

2 kg of DTD, 2 kg of MMDS, 108 g of PVDF, and 5 kg of NMP were taken and dispersed in a stirrer at room temperature at a rotational speed of 800 rpm for 30 min to obtain a slurry. The viscosity of the resultant slurry was 5200 mPa·s. Except for the above, the same operation as in Example 12 was carried out to obtain a PE/CCS/ (DTD + MMDS) composite separator.

### Example 16

1.5 kg of biphenyl, 1.5 kg of deionized water and 15 g of sodium alginate were taken and dispersed in a stirrer at room temperature at a rotational speed of 800 rpm for 30 min to obtain a slurry. The viscosity of the resultant slurry was 4250 mPa·s. Except for the above, the same operation as in Example 12 was carried out to obtain a PE/CCS/biphenyl composite separator.

Details of the substrates, solid organic additive layers, and the like used in the above-mentioned Examples 1 to 16 are shown in Table 1 below.

**Table 1**

| | Subst rate Type | Solid organic additive layer | | | | | Inorganic material layer |
|---|---|---|---|---|---|---|---|
| | | Organic additive | | Binder | | Thick ness/µ m | |
| | | Type | Coating amount (mg/cm² ) | Type | Content (wt%) | | Type |
| Example 1 | PP | DTD | 4.5 | - | - | 2.5 | - |
| Example 2 | PP | Propylene sulfate | 3.6 | - | - | 2.2 | - |
| Example 3 | PP | 1,3-propanesult one | 6.3 | - | - | 3.1 | - |
| Example 4 | PP | MMDS | 1.2 | - | - | 1.4 | - |
| Example 5 | PP | Biphenyl | 0.7 | - | - | 1.2 | - |
| Example 6 | PE | DTD + propylene | 0.8 | - | - | 1.3 | - |
| | | sulfate | | | | | |
| Example 7 | PE | Propylene sulfate + MMDS | 1.3 | - | - | 1.4 | - |
| Example 8 | PE | DTD + propylene | 5.8 | - | - | 2.9 | - |
| | | sulfate + MMDS | | | | | |
| Example 9 | PE | DTD | 0.7 | Polyvinylid ene fluoride | 0.8% | 1.2 | - |
| Example 10 | PE | Propylene sulfate | 1.5 | Polyvinylid ene fluoride | 1.2% | 1.5 | - |
| Example 11 | PE | Biphenyl | 3.3 | Sodium alginate | 0.5% | 2.1 | - |
| Example 12 | PE | DTD | 4.5 | - | - | 2.5 | aluminum oxide (2 µm) |
| Example 13 | PE | DTD + 1,3-propanesult one | 6.7 | - | - | 3.2 | Magnesium hydroxide (2 µm) |
| Example 14 | PE | DTD | 0.7 | Polyvinylid ene fluoride | 1.0% | 1.2 | aluminum oxide (2 µm) |
| Example 15 | PE | DTD + MMDS | 3.3 | Polyvinylid ene fluoride | 1.2% | 2.1 | aluminum oxide (2 µm) |
| Example 16 | PE | Biphenyl | 3.9 | Sodium alginate | 0.5% | 2.3 | aluminum oxide (2 µm) |

### Comparative Example 1

2 kg of vinylene carbonate and 2 kg of NMP were taken and dispersed in a stirrer at room temperature at a rotational speed of 800 rpm for 30 min to obtain a slurry. The viscosity of the resultant slurry was 200 mPa·s. Using 16 µm polypropylene (PP) as the substrate, the slurry obtained above was applied on the surface of the PP substrate by gravure coating (gravure roll diameter 30 µm, gravure speed 35 m/min) , and dried at an oven temperature of 50°C and an air volume of 40 m/s. As the organic additive could not be presented in a solid state, the resultant separator was only a PP substrate, and no solid organic additive layer was formed.

### Comparative Example 2

2 kg of vinylene carbonate and 2 kg of NMP were taken and dispersed in a stirrer at room temperature at a rotational speed of 800 rpm for 30 min to obtain a slurry. The viscosity of the resultant slurry was 200 mPa·s. Using a conventional gravure coating process, an aluminum oxide layer (CCS layer) with a thickness of 2 µm was pre-coated on the surface of a PE substrate with a thickness of 9 µm, and then the above slurry was used as a raw material to perform secondary gravure coating on the surface of the CCS. The gravure roll diameter was 25 mm, the gravure speed was 25 m/min, the oven temperature was 55°C, and the air volume was 35 m/s. As the organic additive could not be presented in a solid state, the obtained separator was only a PE/CCS composite separator, and no solid organic additive layer was formed.

Next, the composite separators obtained in the above examples and comparative examples were used to prepare secondary batteries as shown below, respectively, and the performance tests were conducted. The test results are shown in Table 2 below.

### (1) Preparation of positive electrode sheet

A positive electrode active material LiFePO₄, a conductive agent Super P, a binder polyvinylidene fluoride (PVDF) were prepared into a positive electrode slurry in N-methyl pyrrolidone (NMP). The solid content of the positive electrode slurry was 50wt%, and the mass ratio of LiFePO₄, Super P, and PVDF in the solids was 8:1:1. The positive electrode slurry was coated on the current collector aluminum foil, dried at 85°C, and then cold-pressed. Then, after trimming, cutting, and slitting, it was dried under vacuum at 85°C for 4 h to obtain a positive electrode sheet.

### (2) Preparation of negative electrode sheet

Graphite as a negative electrode active material and Super P as a conductive agent were added and mixed in deionized water to obtain a negative electrode slurry. The negative electrode slurry was coated on the current collector aluminum foil, dried at 85°C, cold-pressed, trimmed, cut, and slit, and then dried under vacuum at 120°C for 12 h to obtain a negative electrode sheet.

### (3) Preparation of secondary battery

The composite separators obtained in the above-mentioned Examples 1 to 16 (represented by separator A in Table 2) and the separators corresponding to Examples 1 to 16 that did not contain a solid organic additive layer (represented by separator A' in Table 2) were used as the separator. The aforementioned positive electrode sheet, separator and negative electrode sheet were stacked in sequence, so that the separator was placed between the positive electrode sheet and the negative electrode sheet to play a role of isolating the positive electrode and the negative electrode, and then they were wound to obtain a bare battery cell. Tabs were welded on, and the bare battery cell was placed in the outer package. 1 mol/L LiPF₆ was dissolved in a mixed solvent of ethylene carbonate and dimethyl carbonate (the volume ratio of ethylene carbonate to dimethyl carbonate was 1:1) to prepare an electrolyte solution (when the electrolyte solution contained the organic additive comprised in the composite separator of the present application, the content of the organic additive in the electrolyte solution was as shown in Table 2). The resultant electrolyte solution was injected into the dried battery cells, packaged, stood, chemically formed, shaped, and tested for capacity. As such, secondary batteries assembled with the separator A and secondary batteries assembled with the corresponding separator A' were prepared.

The following performance tests were performed on the secondary batteries obtained above, and the results are shown in Table 2.

### Secondary battery performance test

### (a) Battery cycle life

Normal voltage cycle range: 2.5-3.65 V, charge-discharge rate 1C, temperature: 60°C; the number of cycles when the battery cell capacity retention rate decayed to 80% was recorded as the battery cell cycle life.

For batteries comprising biphenyl additive, voltage cycle range: 2.5-4.1 V, charge-discharge rate 1C, temperature: 60°C; the number of cycles when the battery cell capacity retention rate decayed to 80% was recorded as the battery cell cycle life.

### (b) Internal pressure of battery

Battery cells whose cycling capacity retention rate had decayed to 80% were selected, discharged to 2.5 V, and allowed to stand for 12 h. Then, the explosion-proof valve of the battery cell was punctured with a pressure gauge with a needle, and the instantaneous value of the pressure gauge was read and recorded as the internal pressure of the battery.

**Table 2**

| Example No. | | Concentration of organic additive of composite separator in electrolyte solution/(mol/L) | Battery cycle life (80%SOH) | | | Internal pressure of b attery (80%SOH) | |
|---|---|---|---|---|---|---|---|
| | | | Separat or A' (Numb er of cycles) | Separate r A (Number of cycles) | Rate of increa se | Separat or A' (Mpa) | Separ ator A (Mpa) |
| Exam ple 1 | 1-a | DTD: 0.2 mol/L | 810 | 1222 | 50.9% | 0.043 | 0.030 |
| | 1-b | DTD: 0.4 mol/L (saturated) | 915 | 1389 | 51.8% | 0.051 | 0.040 |
| Exam ple 2 | 2-a | Propylene sulfate: 0.3 mol/L | 980 | 1365 | 39.3% | 0.082 | 0.060 |
| | 2-b | Propylene sulfate: 0.35 mol/L (saturated) | 1040 | 1470 | 41.3% | 0.083 | 0.065 |
| Exam ple 3 | 3-a | 1,3-propanesultone: 0.1 mol/L | 900 | 1540 | 71.1% | 0.121 | 0.080 |
| | 3-b | 1,3-propanesultone: 0.23 mol/L (saturated) | 990 | 1700 | 71.7% | 0.132 | 0.103 |
| Example 4 | MMDS (saturated) | 895 | 1012 | 13.1% | 0.025 | 0.005 | |
| Example 5 | Biphenyl (saturated) | 228 | 245 | 7.3% | 0.015 | 0.003 | |
| Example 6 | DTD + propylene sulfate (saturated) | 853 | 925 | 8.5% | 0.112 | 0.081 | |
| Example 7 | Propylene sulfate + MMDS (saturated) | 930 | 1062 | 14.2% | 0.055 | 0.032 | |
| Example 8 | DTD + propylene sulfate + MMDS (saturated) | 1055 | 1749 | 65.8% | 0.135 | 0.120 | |
| Example 9 | DTD (saturated) | 910 | 977 | 7.3% | 0.053 | 0.041 | |
| Example 10 | Propylene sulfate (saturated) | 925 | 1078 | 16.5% | 0.092 | 0.073 | |
| Example 11 | Biphenyl (saturated) | 230 | 315 | 37.2% | 0.018 | 0.009 | |
| Example 12 | DTD (saturated) | 880 | 1328 | 50.9% | 0.097 | 0.078 | |
| Example 13 | DTD + 1,3-propanesultone (saturated) | 835 | 1471 | 76.1% | 0.121 | 0.095 | |
| Example 14 | DTD (saturated) | 905 | 971 | 7.3% | 0.063 | 0.040 | |
| Example 15 | DTD + MMDS (saturated) | 880 | 1207 | 37.2% | 0.092 | 0.060 | |
| Example 16 | Biphenyl (saturated) | 233 | 336 | 44.0% | 0.037 | 0.015 | |

As can be seen from Table 2, in Examples 1 to 16 of the present application, by forming a solid organic additive layer on the surface of the substrate (separator A), compared with the case where the solid organic additive layer was not formed (separator A'), the cycle performance of the battery was significantly improved, and the internal pressure of the battery was reduced, so that the safety performance of the battery was improved.

In addition, by comparing Examples 1-a, 2-a, and 3-a with Examples 1-b, 2-b, and 3-b, when the content of the organic additive in the electrolyte solution was saturated, the composite separator of the present application can provide the effect of slowly releasing the organic additive, so that the organic additive in the electrolyte solution can be maintained at a high concentration for a long time, thereby delaying the excessively rapid increase of polarization caused by the deterioration of the graphite negative electrode interface and the accelerated decay of the battery cell cycling.

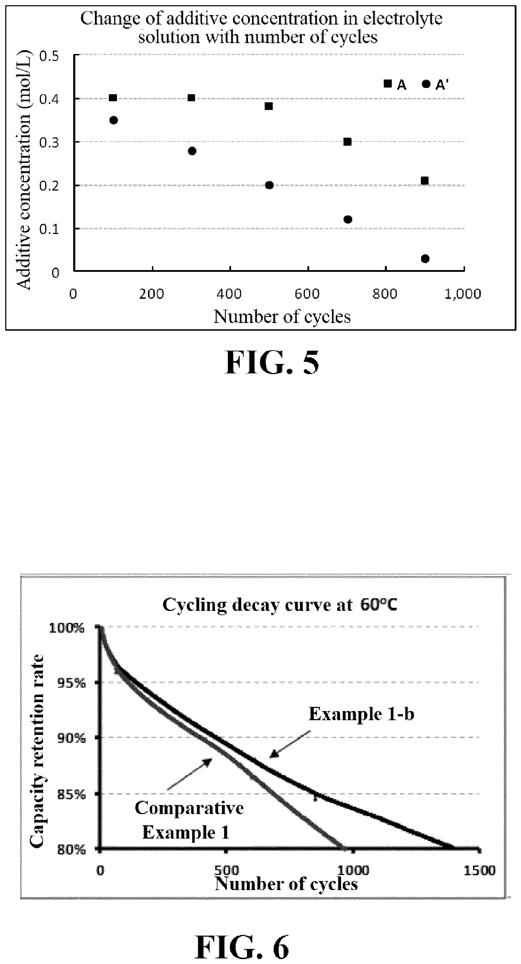

For Example 1-b, the concentration of the additive in the electrolyte solution when the battery cells were cycled to different numbers of cycles using the separator A and the separator A' respectively was measured by gas chromatography, and the specific changes are shown in Fig. 5. It can be seen from Fig. 5 that when the separator A of the present application was used, the concentration of the additive in the electrolyte solution was basically kept saturated at the initial stage of the cycling (≤ 500 cycles), and the concentration of the additive remained at about 0.2 mol/L even when the cycling reached 900 cycles. In contrast, when separator A' was used, the concentration of the additive in the electrolyte solution decreased rapidly from the beginning of the cycling, and the additive was basically exhausted when the cycling reached 900 cycles, resulting in a rapid deterioration of cycle life. Thus, it is further proved that by using the composite separator of the present application, the organic additive in the electrolyte solution can be maintained at a high concentration for a long time, and the battery life can be improved.

In addition, further experiments were carried out for Example 1-b and Comparative Example 1. That is, conventional 1C/1C cycling was performed at 60°C in the range of 2.5-3.65 V, and the changes in battery cycle life were observed, as shown in Fig. 6. It can be seen from Fig. 6 that, compared with Comparative Example 1, the cycle life of the 80% SOH battery of Example 1-b was increased by 474 cls (cls: the number of cycles).

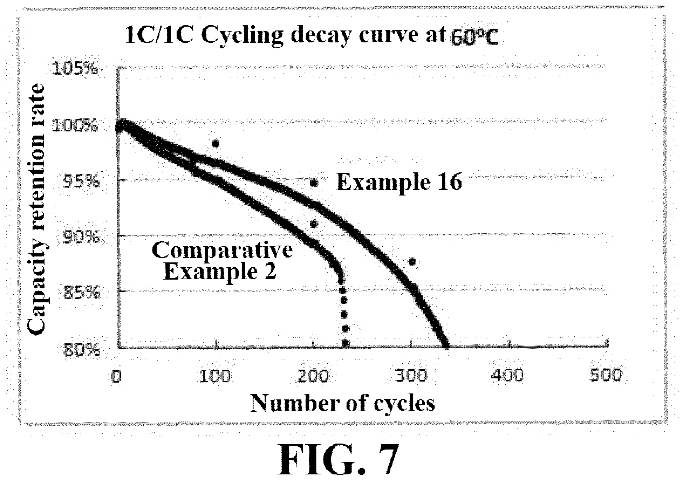

In addition, further experiments were carried out for Example 16 and Comparative Example 2. That is, high pressure cycling was performed at 60°C in the range of 2.5-4.0 V, and the changes in battery cycle life were observed, as shown in Fig. 7. It can be seen from Fig. 7 that the cycle life of the battery of Example 16 was still significantly improved under high pressure. Compared with Comparative Example 2, the cycle life corresponding to 80% SOH was increased by about 103 cls.

It should be noted that the present application is not limited to the embodiments above. The above-described embodiments are merely exemplary, and embodiments having substantially the same technical idea and the same effects within the scope of the technical solution of the present application are all included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A composite separator for a secondary battery, **characterized by** comprising a substrate and a solid organic additive layer provided on at least one surface of the substrate,
the solid organic additive layer comprising an organic additive for an electrolyte solution.

2. The composite separator for a secondary battery according to claim 1, **characterized in that**, the organic additive for an electrolyte solution is selected from at least one of ethylene sulfate, propylene sulfate, 1,3-propanesultone, methylene methanedisulfonate and biphenyl.

3. The composite separator for a secondary battery according to claim 1 or 2, **characterized in that**, the solid organic additive layer has a thickness of 0.5-5 µm.

4. The composite separator for a secondary battery according to any one of claims 1 to 3, **characterized in that**, in the solid organic additive layer, the content of the organic additive for an electrolyte solution is 0.01 to 10 mg/cm².

5. The composite separator for a secondary battery according to any one of claims 1 to 4, **characterized in that**, the surface roughness of the substrate is 3 µm ≤ Ra ≤ 10 µm.

6. The composite separator for a secondary battery according to any one of claims 1 to 5, **characterized in that**, an inorganic material layer is further provided between the substrate and the solid organic additive layer.

7. The composite separator for a secondary battery according to claim 6, **characterized in that**, the inorganic material layer comprises at least one selected from aluminum oxide and aluminum hydroxide.

8. The composite separator for a secondary battery according to any one of claims 1 to 7, **characterized in that**, the solid organic additive layer further comprises a binder, and optionally, the binder is selected from at least one of polyvinylidene fluoride, sodium alginate and styrene butadiene rubber.

9. The composite separator for a secondary battery according to claim 8, **characterized in that**, the organic additive for an electrolyte solution is biphenyl, and the binder comprises at least one selected from sodium alginate and styrene butadiene rubber.

10. The composite separator for a secondary battery according to claim 8 or 9, **characterized in that**, the solid organic additive layer comprises sodium alginate, wherein the content of the sodium alginate is 0.5wt% to 2.0wt% relative to the total weight of the solid organic additive layer.

11. The composite separator for a secondary battery according to claim 8, **characterized in that**, the organic additive for an electrolyte solution is selected from at least one of ethylene sulfate, propylene sulfate, 1,3-propanesultone, and methylene methanedisulfonate, and the binder comprises polyvinylidene fluoride.

12. The composite separator for a secondary battery according to any one of claims 1 to 11, **characterized in that**, the substrate is made of at least one of polypropylene, polyethylene, polyvinylidene fluoride, polyimide and glass fiber.

13. A secondary battery, **characterized by** comprising a positive electrode, a negative electrode, the composite separator according to any one of claims 1 to 12, and an electrolyte solution.

14. The secondary battery according to claim 13, **characterized in that**, the electrolyte solution contains the organic additive for an electrolyte solution according to claim 1, and the organic additive for an electrolyte solution reaches a saturated concentration.

15. An electrical apparatus, **characterized by** comprising a secondary battery of claim 13 or 14.
